# EUROPEAN PATENT APPLICATION

(11) **EP 2 848 511 A1**
(43) Date of publication of application: **18.03.2015**
(21) Application number: 14184527.1
(22) Date of filing: 12.09.2014
(51) Int. Cl.: B62K 23/00, F16C 1/26

(54) **Grip shifter bracket for electrically assisted bicycle**

(30) Priority: 16.09.2013 TW 102217439 U
(71) Applicant: J.D Components Co., Ltd., Shou Shui Hsiang, Chang Hua Hsien (TW)
(72) Inventor: Liu, Ping, Chang Hua Hsien (TW)
(74) Representative: Straus, Alexander

(57) **Abstract**

A grip shifter bracket (10) used in an electrically assisted bicycle is disclosed to include a bottom wall (12), a first end wall (14) connected to one end of the bottom wall (12) and defining a first retaining hole (142) fastenable to a cable housing (30) of the electrically assisted bicycle, and a second end wall (16) connected to an opposite end of the bottom wall (12) and defining a second retaining hole (162) fastenable to a grip shifter (40) of the electrically assisted bicycle. Thus, the grip shifter bracket (10) of the invention assures a high level of smoothness of the gear shift operation of the electrically assisted bicycle.

## Description

### BACKGROUND OF THE INVENTION

### 1. Field of the Invention

The present invention relates to electrically assisted bicycle technology and more particularly, to a grip shifter bracket for electrically assisted bicycle.

### 2. Description of the Related Art

In order to fit different road conditions, an electrically assisted bicycle is generally equipped with a derailleur for allowing change of the gear shift position. When going to change the gear shift position, the bicycle rider can operate the grip shifter to pull tight or release the derailleur cable, enabling the derailleur cable to change the gear shift position. At this time, the gear shift sensor will detect the position of the derailleur cable so that the controller can control the motor to output the correct booster subject to the sensed result of the gear shift sensor.

However, after a long use, the operation of the grip shifter or derailleur cable can become unsmooth due to the effect of road vibration or other factors. If the position of the adjustment grip or the tension of the derailleur cable is not properly calibrated, the gear shift operation of the derailleur can be affected, causing the gear shift sensor unable to accurately detect the position of the derailleur cable and resulting in improper output of the motor.

### SUMMARY OF THE INVENTION

The present invention has been accomplished under the circumstances in view. It is the main object of the present invention to provide a grip shifter bracket for electrically assisted bicycle, which assures gear shifting smoothness, enabling the gear shift sensor to accurately sense the gear shift position so that the motor can output the correct booster.

To achieve this and other objects of the present invention, a grip shifter bracket comprises a bottom wall, a first end wall, and a second end wall. The first end wall and the second end wall are respectively connected to two opposite ends of the bottom wall. Further, the first end wall comprises a first retaining hole for fastening to a cable housing of the electrically assisted bicycle. The second end wall comprises a second retaining hole for fastening to the grip shifter of the electrically assisted bicycle. Thus, the grip shifter bracket of the invention assures a high level of smoothness of the gear shift operation of the electrically assisted bicycle, improving bicycle riding quality.

Preferably, the bottom wall comprises a positioning protrusion for engagement with the grip shifter to enhance the stability of the assembled structure.

Preferably, the first and second retaining holes have a C-shaped configuration. Further, the diameter of the second retaining hole is larger than the diameter of the first retaining hole so that the first and second retaining holes can fit the configuration and size of the cable housing and the grip shifter.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is an exploded view of a grip shifter and a grip shifter bracket in accordance with the present invention.
FIG. 2 is a top assembly view of FIG. 1.
FIG. 3 is a cross-sectional view of FIG. 2.
FIG. 4 is a system block diagram of the present invention.

### DETAILED DESCRIPTION OF THE INVENTION

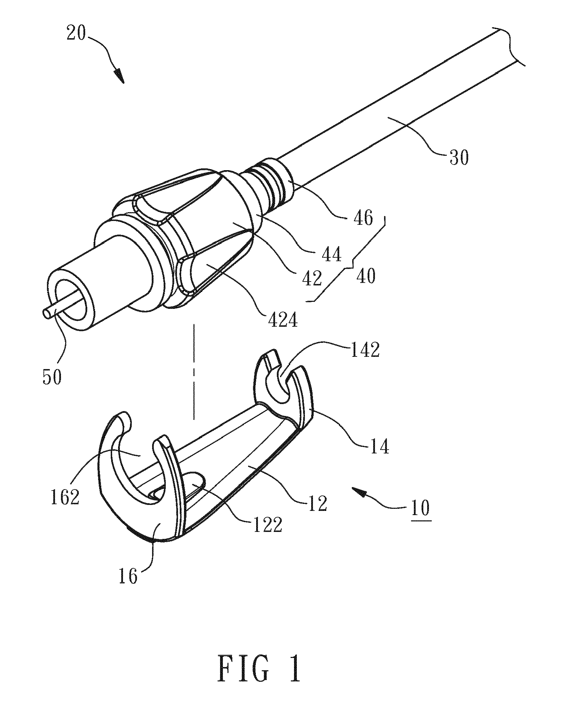

Referring to FIG. 1, a grip shifter bracket **10** in accordance with the present invention is shown. The grip shifter bracket **10** comprises a bottom wall **12,** a first end wall **14,** and a second end wall **16,** wherein the bottom wall **12** defines a positioning protrusion **122** at an inner side thereof; the first end wall **14** and the second end wall **16** are respectively formed integral with two opposite ends of the bottom wall **12** in a parallel relationship; the first end wall **14** defines a C-shaped first retaining hole **142;** the second end wall **16** defines a C-shaped second retaining hole **162** that has a diameter larger than the diameter of the first retaining hole **142.**

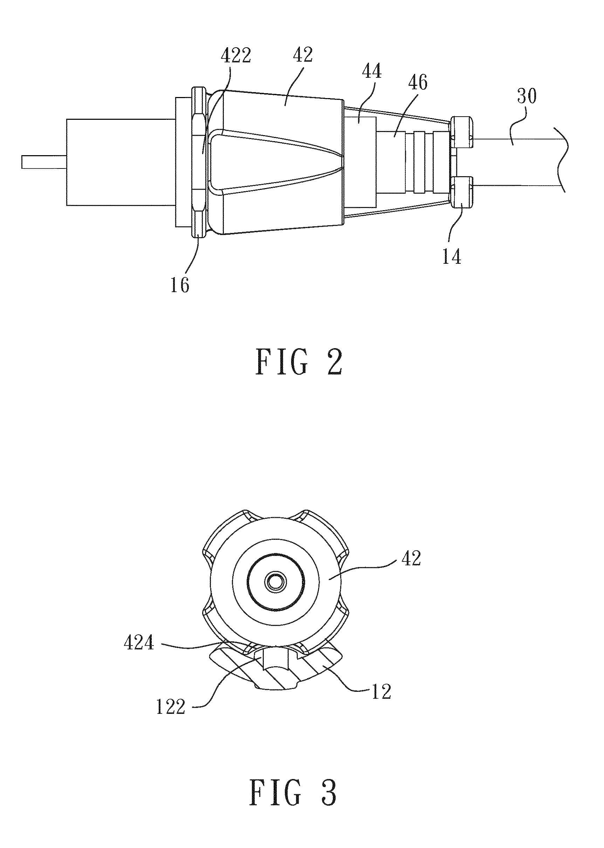

Referring to FIG. 1 again, the derailleur **20** illustrated in the drawing comprises a cable housing **30,** a grip shifter **40,** and a derailleur cable **50** inserted through the cable housing **30** and the grip shifter **40.** The grip shifter **40** comprises a rotary adjustment grip **42** defining a flange **422** at one end thereof (see FIG. 2) and a plurality of grooves **424** equiangularly spaced around the periphery thereof, a screw nut **44** threaded into an opposite end of the rotary adjustment grip **42,** and an end cap **46** with two opposite ends thereof respectively connected to the screw nut **44** and the cable housing **30.** Thus, rotating the rotary adjustment grip **42** drives the screw nut **44** to move the end cap **46** and then the cable housing **30,** thereby pulling tight the derailleur cable **50** to achieve the desired gear shift effect.

During installation of the present invention, as shown in FIGS. 1-3, attach the first retaining hole **142** of the first end wall **14** to the cable housing **30** at first, and then attach the second retaining hole **162** of the second end wall **16** to the flange **422** of the rotary adjustment grip **42** of the grip shifter **40.** Because the first retaining hole **142** fits the configuration and size of the cable housing **30** and the second retaining hole **162** fits the configuration and size of the flange **422,** the grip shifter bracket **10** and the derailleur **20** can be firmly secured together. At last, force the positioning protrusion **122** of the bottom wall **12** into engagement with one groove **424** of the rotary adjustment grip **42** of the grip shifter **40** to enhance the structural stability.

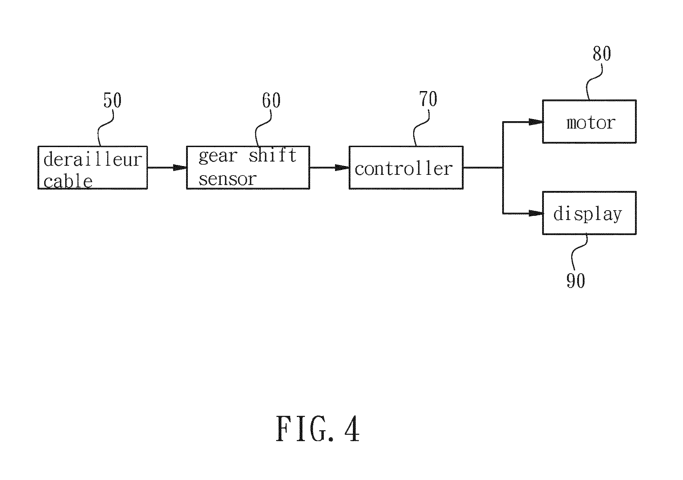

In conclusion, after the grip shifter bracket **10** is assembled, it is fastened to the cable housing **30** and the grip shifter **40.** Thus, when operating the grip shifter **40,** the grip shifter bracket **10** enhances the moving smoothness of the cable housing **30** and the derailleur cable **50.** Thus, as shown in FIG. 4, a gear shift sensor **60** at the derailleur cable **50** can accurately detect the position of the derailleur cable **50** and send a sensing signal to a controller **70,** enabling the controller **70** to control the output of a motor **80** subject to the sensed result of the gear shift sensor **60,** and simultaneously to control a display **90** to display the accurate gear shift position and the related vehicle information, achieving the object of the present invention.

## Claims

1. A grip shifter bracket (10) used in an electrically assisted bicycle comprising a cable housing (30) and a grip shifter (40) connected to said cable housing (30), said grip shifter bracket (10) comprising:
a bottom wall (12);
a first end wall (14) connected to one end of said bottom wall (12), said first end wall (14) comprising a first retaining hole (142) fastenable to said cable housing (30); and
a second end wall (16) connected to an opposite end of said bottom wall (12) and facing toward said first end wall (14), said second end wall (16) comprising a second retaining hole (162) fastenable to said grip shifter (40).

2. The grip shifter bracket (10) as claimed in claim 1, wherein said bottom wall (12) comprises a positioning protrusion (122) adapted for engagement with said grip shifter (40).

3. The grip shifter bracket (10) as claimed in claim 1, wherein said first end wall (14) and said second end wall (16) are arranged in parallel.

4. The grip shifter bracket (10) as claimed in claim 1, wherein said first retaining hole (142) and said second retaining hole (162) have a C-shaped configuration.

5. The grip shifter bracket (10) as claimed in claim 1, wherein said second retaining hole (162) has a diameter larger than the diameter of said first retaining hole (142).
